**Europäisches Patentamt**

(19) **European Patent Office**

**Office européen des brevets**

(11) Numéro de publication : **0 131 000 B1**

# (12) FASCICULE DE BREVET EUROPÉEN

(45) Date de publication du fascicule du brevet :
**17.08.88**

(51) Int. Cl.⁴ : **F 02 B 19/06, F 02 B 41/04**

(21) Numéro de dépôt : **84900018.7**

(22) Date de dépôt : **28.12.83**

(86) Numéro de dépôt international :
**PCT/BE 83/00024**

(87) Numéro de publication internationale :
**WO/8402745 (19.07.84 Gazette 84/17)**

(54) **MOTEUR A EXPLOSION.**

(30) Priorité : **04.01.83 LU 84574**

(43) Date de publication de la demande :
**16.01.85 Bulletin 85/03**

(45) Mention de la délivrance du brevet :
**17.08.88 Bulletin 88/33**

(84) Etats contractants désignés :
**AT BE CH DE FR GB LI LU NL SE**

(56) Documents cités :
**WO-A-80 /000 95**
**WO-A-82 /044 62**
**DE-A- 2 401 509**
**DE-C- 355 440**
**GB-A- 212 866**
**Le dossier contient des informations techniques présentées postérieurement au dépôt de la demande et ne figurant pas dans le présent fascicule.**

(73) Titulaire : **VAN AVERMAETE, Gilbert Lucien Charles Henri Louis**
**2, Um Bourbierg**
**L-3335 Hellange (LU)**

(72) Inventeur : **VAN AVERMAETE, Gilbert Lucien Charles Henri Louis**
**2, Um Bourbierg**
**L-3335 Hellange (LU)**

(74) Mandataire : **Dellicour, Paul**
**Office de Brevets E. Dellicour rue Fabry 18/012**
**B-4000 Liège (BE)**

Jouve, 18, rue St-Denis, 75001 Paris, France

## Description

La présente invention concerne les moteurs à explosion à combustion interne à chambre auxiliaire variable et a pour but de réaliser un moteur, dans lequel la chambre de compression du fluide provoquant le mouvement du piston dans le cylindre du moteur est à volume variable avec un taux de compression constant pour une même vitesse du moteur, de telle sorte que les rapports volumétriques puissent varier en concordance avec les différents régimes du moteur et qu'il soit possible de mettre sous combustion une partie, importante ou non, de la totalité du fluide comburant admis dans la chambre de détente du moteur.

Le but est atteint suivant l'invention, du fait que le moteur à explosion à combustion interne, à allumage commandé, comprenant au moins un premier piston coulissant dans un premier cylindre, est caractérisé en ce que ce premier cylindre communique à proximité de l'extrémité correspondant au point mort haut du premier piston, avec un deuxième cylindre et avec un troisième cylindre, un deuxième piston étant agencé dans le deuxième cylindre pour y délimiter une chambre à volume variable, dans laquelle se trouvent des moyens d'injection et d'allumage, et un troisième piston étant agencé dans le troisième cylindre pour y délimiter une autre chambre à volume variable, le deuxième piston et le troisième piston étant dotés d'un mouvement alternatif avec un déphasage de 180°, le deuxième cylindre communiquant par un conduit avec le premier cylindre, soit directement, soit par l'intermédiaire du troisième cylindre.

Suivant l'invention le mouvement alternatif avec déphasage de 180° est réalisé par l'intermédiaire de manetons décalés sur l'arbre d'un petit vilebrequin formant avec l'arbre à cames une chaîne cinématique, dans laquelle est située la cage du coupleur.

Egalement suivant l'invention, dans la cage du coupleur l'engrenage d'entrée de transmission est entraîné par l'arbre à cames sans être bloqué par celui-ci et en étant relié à celui-ci par des cannelures hélicoïdales et, situé sur un même plan, l'engrenage de sortie entraîné par l'engrenage d'entrée assure la transmission de l'arbre du petit vilebrequin, sans être bloqué sur ce dernier et en étant relié à ce dernier également par des cannelures hélicoïdales.

Pour mieux faire comprendre l'invention celle-ci est décrite maintenant avec plus de détails, sur la base du dessin schématique annexé, à titre d'exemple uniquement, montrant en :

Figure 1 une vue en coupe longitudinale partielle d'un moteur conforme à l'invention ;

Figures 2 et 3 une coupe respectivement par A-A et par B-B de la figure 1.

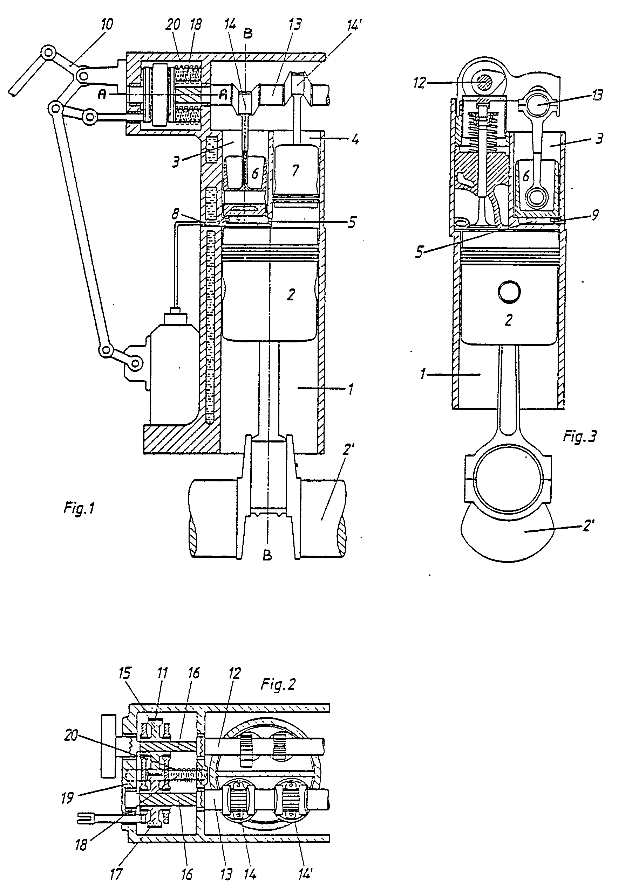

On a représenté au dessin un moteur à un cylindre 1, à explosion et à combustion interne. A proximité de l'extrémité du cylindre correspondant au point mort haut du piston 2 agencé dans ledit cylindre sont prévus d'une part un deuxième cylindre 3 faisant partie intégrante du premier cylindre 1 et d'autre part un troisième cylindre 4 cloisonné par rapport aux autres cylindres mais communiquant par un conduit avec le premier cylindre 1 soit directement, soit comme il est visible en 5 dans la figure 1 par l'intermédiaire du deuxième cylindre.

Dans chacun des cylindres 3 et 4 est monté un piston 6, respectivement 7 et dans le deuxième cylindre 3 sont prévus des moyens d'injection 8 et des moyens 9 pour enflammer le mélange.

Par les moyens de la commande des gaz 10 il est possible de déterminer, suivant le couple moteur recherché, une répartition de l'air comprimé par le premier cylindre 1 dans le cylindre 3, celui de la combustion, et dans le cylindre 4, celui de la réserve d'air.

Suivant l'invention, la cage du coupleur 11 est située dans la chaîne cinématique entre l'arbre à cames 12 et l'arbre du petit vilebrequin 13, qui comporte deux manetons 14, 14' décalés à 180° l'un par rapport à l'autre et transmettant le mouvement alternatif aux pistons 6, 7 respectivement des deuxième et troisième cylindres 3, 4.

L'engrenage d'entrée de transmission 15 est entraîné par l'arbre à cames 12 sans être bloqué par celui-ci, ledit engrenage étant relié audit arbre à cames par des cannelures hélicoïdales 16.

De même, situé sur un même plan, l'engrenage de sortie 17, entraîné par l'engrenage d'entrée 15, assure la transmission de l'arbre du petit vilebrequin 13 sans être bloqué sur ce dernier, ledit engrenage de sortie 17 étant également relié par des cannelures hélicoïdales 16 identiques à celles de l'arbre à cames 12.

Deux axes guides 18, parallèles à l'arbre à cames 12 et à l'arbre du petit vilebrequin 13, sont fixés dans la culasse 19 et traversent des alésages pratiqués à travers les parois de la cage du coupleur 11, de manière que cette dernière ne puisse bouger transversalement. Ces deux axes sont munis d'un ressort de rappel 20 permettant au coupleur de revenir en position de régime de ralenti, lorsqu'il y a rupture de commande. On peut prévoir un volume différentiel entre les cylindres de la chambre de combustion et de la chambre de réserve d'air, par exemple en réduisant le volume de cette dernière pour permettre un taux de compression plus élevé en régime de puissance partielle.

La pédale des gaz agit sur la tringlerie de commande et sur la tige d'articulation solidaire de la plaque d'appui de la cage du coupleur 11 et déplace cette dernière suivant les deux axes guides 18 et les deux arbres 12, 13.

Le déplacement axial total de la cage du coupleur 11 située dans la culasse 19 provoque une double rotation contraire de 90° entre l'arbre à cames 12 et l'arbre du petit vilebrequin 13, soit au total 180° entre ces derniers, ce qui a pour conséquence de modifier les rapports volumiques des deuxième et troisième cylindres 3, 4 au moment du positionnement du piston 2 du premier cylindre 1 placé au point mort haut en phase fin de compression.

Suivant l'invention sont prévus des moyens pour déplacer les pistons 6, 7 des deuxième et troisième cylindres 3, 4, afin de décalaminer ces derniers par un balayage au moins une fois entre chaque combustion.

Sont prévus également des moyens pour entraîner le petit vilebrequin 13 soit à la même vitesse que le vilebrequin principal 2', soit à demi-vitesse par rapport à ce dernier.

Sont encore prévus des moyens pour synchroniser les vitesses des trois pistions 2, 6, 7 et des moyens pour constituer une chambre de combustion de ralenti dans le deuxième cylindre, en dehors de la zone de balayage du piston correspondant, chambre dans laquelle sont disposés les moyens d'injection et les moyens enflammant le mélange.

Pour augmenter ou réduire le volume de la chambre de ralenti en fonction de la vitesse désirée du moteur des moyens de réglage d'arrêt sont prévus. Ainsi, pour limiter le début de la course axiale du coupleur 11 et ne pas dépasser un déphasage de rotation de 180° du petit vilebrequin 13 par rapport au grand vilebrequin 2', le calage entre ces derniers coïncide de telle manière que le piston 2 de la chambre de détente monté sur le grand vilebrequin 2' est situé en position point mort haut, en phase fin de compression, lorsque le piston 6 de la chambre de combustion 3 et le piston 7 de la chambre de réserve d'air 4 montés sur le petit vilebrequin 13 se situent respectivement l'un en position point mort haut, l'autre en position point mort bas.

Cette position coïncide également avec la position de la plaque d'appui du coupleur — munie de la tige de commande — lorsqu'elle est située contre la vis de réglage du ralenti (non représentée au dessin), cette vis réglant la limite du début de la course axiale du coupleur. A ce moment, la chambre de ralenti aura son volume minimal et la chambre de réserve d'air son volume maximal.

Un autre exemple de réglage consiste en ce que le piston 6 de la chambre de combustion 3 monté sur le petit vilebrequin 13 n'atteigne pas la position point mort haut et le piston 7 de la chambre de réserve d'air la position point mort bas dans les conditions de positionnement précitées du grand vilebrequin 2', la plaque d'appui du coupleur — celle munie de la tige de commande — étant également située contre la vis de réglage du ralenti. Dans ce cas, le réglage de la position de la vis de ralenti ne sera plus bloquée au début de la limite de la course axiale dudit coupleur et la chambre de ralenti aura un volume plus grand que le volume minimal et la chambre de réserve d'air un volume plus petit que le volume maximal.

D'autres moyens de réglage d'arrêt sont encore prévus pour limiter la fin de course axiale du coupleur, afin de ne pas dépasser le déphasage de 180° du petit vilebrequin 13 par rapport au grand vilebrequin 2'. Le calage entre ces derniers coïncide de telle manière que le piston 2 de la chambre de détente 1 monté sur le grand vilebrequin 2' est situé en position du point mort haut en phase fin de compression, lorsque le piston 6 de la chambre de combustion 3 et le piston 7 de la chambre de réserve d'air 4 montés sur le petit vilebrequin 13 se situent respectivement l'un en position point mort bas et l'autre en position point mort haut. Cette position coïncide également avec la position de la plaque d'appui du coupleur — celle dépourvue de la tige de commande — lorsqu'elle est située contre la vis de réglage de la puissance (non représentée sur le dessin), cette vis réglant la limite de fin de la course axiale dudit coupleur. A ce moment, la chambre de combustion 3 aura son volume maximum et la chambre de réserve d'air 4 son volume réduit à néant.

Un autre exemple encore de réglage consiste en ce que le piston 6 de la chambre de combustion 3 monté sur le petit vilebrequin 13 n'atteigne pas la position point mort bas et que le piston 7 de la chambre de réserve d'air 4 monté sur le même vilebrequin 13 n'atteigne pas la position point mort haut dans les conditions de positionnement précitées du grand vilebrequin 2', la plaque d'appui du coupleur précitée — celle non munie de la tige de commande — étant également située contre la vis de puissance ne sera plus bloquée à la fin de la limite de la course axiale dudit coupleur. La chambre de combustion 3 aura un volume plus petit que le volume maximal et la chambre de réserve d'air 4 un volume minimal.

Ces réglages permettent de limiter la puissance du moteur en réduisant le volume de la chambre de combustion 3 et en augmentant proportionnellement le volume de la chambre de réserve d'air 4.

Les réglages de puissance permettent également de doser les quantités d'air de combustion et d'injection du combustible, ils déterminent la puissance, le niveau de température du moteur, la dilution par un excès d'air de réserve nécessaire pour la qualité des gaz d'échappement.

Bien entendu, on ne sortirait pas du domaine de l'invention en apportant à la réalisation décrite ci-dessus et représentée au dessin l'une ou l'autre modification constructive rentrant dans le cadre des revendications annexées.

Ainsi, on a représenté le moteur avec un seul cylindre 1 mais un moteur suivant l'invention peut en comprendre plusieurs à chacun desquels est associé un deuxième cylindre 3 et un troisième cylindre 4.

## Revendications

1. Moteur à explosion à combustion interne, à allumage commandé, comprenant au moins un premier piston (2) coulissant dans un premier cylindre (1) caractérisé en ce que ce premier cylindre (1) communique à proximité de l'extrémité correspondant au point mort haut du premier piston (2), avec un deuxième cylindre (3) et avec un troisième cylindre (4), un deuxième piston (6) étant agencé dans le deuxième cylindre (3) pour y délimiter une chambre à volume variable, dans laquelle se trouvent des moyens d'injection (8) et d'allumage (9), et un troisième piston (7) étant agencé dans le troisième cylindre (4) pour y délimiter une autre chambre à volume variable, le deuxième piston (6) et le troisième piston (7) étant dotés d'un mouvement alternatif avec un déphasage de 180°, le deuxième cylindre (3) communiquant par un conduit (5) avec le premier cylindre (1), soit directement, soit par l'intermédiaire du troisième cylindre (4).

2. Moteur à explosion suivant la revendication 1, caractérisé en ce que le mouvement alternatif avec déphasage de 180° est réalisé par l'intermédiaire de manetons (14, 14') décalés sur l'arbre d'un petit vilebrequin (13) formant avec l'arbre à cames (12) une chaîne cinématique, dans laquelle est située la cage du coupleur (11).

3. Moteur à explosion suivant la revendication 2, caractérisé en ce que dans la cage du coupleur (11) l'engrenage d'entrée de transmission (15) est entraîné par l'arbre à cames (12) sans être bloqué par celui-ci et en étant relié à celui-ci par des cannelures hélicoïdales (16) et, situé sur un même plan, l'engrenage de sortie (17) entraîné par l'engrenage d'entrée (15) assure la transmission de l'arbre du petit vilebrequin (13), sans être bloqué sur ce dernier et en étant relié à ce dernier également par des cannelures hélicoïdales (16).

4. Moteur à explosion suivant l'une quelconque des revendications 2 et 3, caractérisé en ce que dans la culasse sont fixés deux axes guides (18) munis d'un ressort de rappel (20) et parallèles à l'arbre à cames (12) et à l'arbre du petit vilebrequin (13), axes guides (18) suivant lesquels se déplace la cage du coupleur (11) sous la commande de la pédale des gaz (20) par l'intermédiaire de la tringlerie de commande et de la tige d'articulation solidaire de la plaque d'appui de la cage du coupleur.

5. Moteur à explosion suivant l'une quelconque des revendications 1 à 4, caractérisé en ce que le volume du troisième cylindre (4) ou chambre de réserve d'air est réduit par rapport au volume du deuxième cylindre (3) ou chambre de combustion, de manière à permettre un taux de compression plus élevé en régime de puissance partielle.

6. Moteur à explosion suivant l'une quelconque des revendications 1 à 4, caractérisé en ce qu'il comprend des moyens pour régler la vitesse de l'arbre du petit vilebrequin par rapport à celui du vilebrequin principal et synchroniser les vitesses des trois pistons.

7. Moteur à explosion suivant l'une quelconque des revendications 1 à 4, caractérisé en ce qu'il comprend des moyens pour balayer entièrement les deuxième et troisième cylindres par les pistons correspondants au moins une fois entre chaque combustion, de manière à décalaminer les volumes desdits cylindres.

8. Moteur à explosion suivant l'une quelconque des revendications 1 à 4, caractérisé en ce qu'il comporte des moyens de réglage d'arrêt limitant le début de la course axiale du coupleur, de manière à ne pas dépasser un déphasage de rotation de 180° de l'arbre du petit vilebrequin par rapport à celui du vilebrequin principal.

**Claims**

1. A controlled ignition, internal combustion engine comprising at least a first piston (2) moving in a first cylinder (1), characterised in that at a position close to the end corresponding to the upper dead point of the first piston (2), this first cylinder (1) communicates with a second cylinder (3) and with a third cylinder (4), a second piston (6) being mounted in the second cylinder (3) in order to delimit therein a variable-volume chamber wherein injection means (8) and ignition means (9) are provided, and a third piston (7) being mounted in the third cylinder (4) in order to delimit therein another variable-volume chamber, the second piston (6) and the third piston (7) being subjected to an alternating movement offset by 180°, the second cylinder (3) communicating by a duct (5) with the first cylinder (1), either directly or by way of the third cylinder (4).

2. The engine according to claim 1, wherein the alternating movement offset by 180° is achieved by means of crank pins (14, 14') staggered from each other on the shaft of a small crank (13) forming with the cam shaft (12) a kinematic chain containing the clutch casing (11).

3. The engine according to claim 2, wherein the clutch casing (11) includes the transmission input gearing (15) driven by the cam shaft (12) without being locked thereto but connected to said cam shaft by spiral grooves (16) and, mounted in the same plane, the output gearing (17) driven by the input gearing (15) so as to provide for the transmission of the small crankshaft (13) without being locked thereto but connected to the latter also by spiral grooves (16).

4. The engine according to any one of the preceding claims 2 and 3, wherein two guide pins (18) provided with a recoil spring (20), parallel to the cam shaft (12) and to the small crankshaft (13), are mounted in the cylinder head and enable the clutch casing (11) to move upon throttle (10) actuation by means of the control linkage and the hinged rod which is integrally connected to the bearing plate of the clutch casing.

5. The engine according to any one of the preceding claims 1 to 4, wherein the volume of the third cylinder (4) or reserve air chamber is reduced with respect to the volume of the second cylinder (3) or combustion chamber in order to provide a higher compression ratio when the engine is running at partial output.

6. The engine according to any one of the preceding claims 1 to 4, wherein means for adjusting the velocity of the small crankshaft with respect to the main crankshaft and for synchronising the velocities of the three pistons are provided.

7. The engine according to any one of the preceding claims 1 to 4, wherein means for displacing the pistons of the second and third cylinders for the prupose of decarburizing the latter by a sweeping movement at least once between each combustion are provided.

8. The engine according to any one of the preceding claims 1 to 4, wherein stop control means in order to limit the start of the clutch axial movement, so that the rotation offset between the small crank and the main crankshaft does not exceed 180°, are provided.

## Patentansprüche

1. Brennkraftmaschine mit gesteuerter Zündung, mit mindestens einem ersten Kolben (2), der in einem ersten Zylinder (1) gleitet, dadurch gekennzeichnet, daß der erste Zylinder (1) nahe bei dem Ende, das dem oberen Totpunkt des ersten Kolbens (2) entspricht, mit einem zweiten Zylinder (3) und einem dritten Zylinder (4) in Verbindung steht, wobei ein zweiter Kolben (6) in dem zweiten Zylinder (3) angeordnet ist, um darin eine Kammer mit variablem Volumen zu begrenzen, in der sich Einspritzmittel (8) und Zündmittel (9) befinden, und wobei ein dritter Kolben (7) in dem dritten Zylinder (4) angeordnet ist, um darin eine weitere Kammer mit variablem Volumen zu begrenzen, wobei der zweite Kolben (6) und der dritte Kolben (7) mit einer Phasenverschiebung von 180° eine Hin- und Herbewegung ausführen, und der zweite Zylinder (3) über einen Kanal (5) mit dem ersten Zylinder (1) in Verbindung steht, und zwar entweder direkt, oder über den dritten Zylinder (4).

2. Brennkraftmaschine gemäß Anspruch 1, dadurch gekennzeichnet, daß die Hin- und Herbewegung mit einer Phasenverschiebung von 180° über Kurbelzapfen (14, 14') verwirklicht ist, die auf einer kleinen Kurbelwelle (13) versetzt angeordnet sind, die mit der Nockenwelle (12) eine kinematische Kette bildet, in der der Käfig der Kupplung (11) angeordnet ist.

3. Brennkraftmaschine gemäß Anspruch 2, dadurch gekennzeichnet, daß in dem Käfig der Kupplung (11) das Eingangsgetriebe (15) von der Nockenwelle (12) angetrieben wird, ohne auf dieser blockiert zu sein, wobei es über spiralförmige Nuten (16) mit dieser verbunden ist, und das in derselben Ebene gelegene Ausgangsgetriebe (17), das von dem Eingangsgetriebe (15) angetrieben wird, den Antrieb der kleinen Kurbelwelle (13) bewirkt, ohne auf dieser letzteren blockiert zu sein, wobei es ebenfalls über spiralförmige Nuten (16) mit dieser letzteren verbunden ist.

4. Brennkraftmaschine gemäß irgendeinem der Ansprüche 2 oder 3, dadurch gekennzeichnet, daß in dem Zylinderkopf zwei Führungsachsen (18) angebracht sind, die mit einer Rückholfeder (20) versehen sind, und parallel zu der Nockenwelle (12) und der kleinen Kurbelwelle (13) angeordnet sind, wobei der Käfig der Kupplung (11) bei Betätigung des Gaspedals (10) über das Steuergestänge und die mit der Auflageplatte des Kupplungskäfigs fest verbundene Gelenkstange in Richtung der Führungsachsen verschoben wird.

5. Brennkraftmaschine gemäß irgendeinem der Ansprüche 1 bis 4, dadurch gekennzeichnet, daß das Volumen des dritten Zylinders (4) oder der Luftvorratskammer gegenüber dem Volumen des zweiten Zylinders (3) oder der Verbrennungskammer vermindert wird, so daß bei Teilleistungsbetrieb ein höherer Verdichtungsgrad erhalten werden kann.

6. Brennkraftmaschine gemäß irgendeinem der Ansprüche 1 bis 4, dadurch gekennzeichnet, daß sie Mittel aufweist, um die Drehzahl der kleinen Kurbelwelle im Vergleich zu der Drehzahl der Hauptkurbelwelle einzustellen, und die Geschwindigkeiten der drei Kolben zu synchronisieren.

7. Brennkraftmaschine gemäß irgendeinem der Ansprüche 1 bis 4, dadurch gekennzeichnet, daß sie Mittel aufweist, um den zweiten und dritten Zylinder durch die zugehörigen Kolben mindestens einmal zwischen jeder Verbrennung vollständig zu spülen, so daß die Volumen der besagten Zylinder entgraphitiert werden.

8. Brennkraftmaschine gemäß irgendeinem der Ansprüche 1 bis 4, dadurch gekennzeichnet, daß sie Mittel zum Einstellen des Anschlags aufweist, der den Anfang des axialen Hubs der Kupplung begrenzt, so daß eine Rotations-Phasenverschiebung von 180° zwischen der kleinen Kurbelwelle und der Hauptkurbelwelle nicht überschritten wird.

Fig.1

Fig.2

Fig.3